# EUROPÄISCHE PATENTSCHRIFT

(11) **EP 3 066 531 B1**
(45) Veröffentlichungstag und Bekanntmachung des Hinweises auf die Patenterteilung: **31.01.2018**
(21) Anmeldenummer: 14828121.5
(22) Anmeldetag: 06.11.2014
(51) Int. Cl.: G05B 19/042, H04L 29/12, B65G 43/10

(54) **VERFAHREN ZUM ADRESSIEREN LINEAR VERKETTETER STEUERKOMPONENTEN EINER FÖRDERANLAGE**
METHOD FOR ADDRESSING/SEQUENCING LINEARLY INTERLINKED CONTROL COMPONENTS OF A CONVEYING SYSTEM
PROCÉDÉ POUR ADRESSER/ENFILER DES COMPOSANTS DE COMMANDE ENCHAÎNÉS DE MANIÈRE LINÉAIRE D'UNE INSTALLATION DE TRANSPORT

(30) Priorität: 06.11.2013 AT 507372013
(43) Veröffentlichungstag der Anmeldung: 14.09.2016
(73) Patentinhaber: TGW Mechanics GmbH, 4600 Wels (AT)
(72) Erfinder: REISCHL, Josef, A-4623 Gunskirchen (AT)
(74) Vertreter: Burger, Hannes
(86) Internationale Anmeldenummer: PCT/AT2014/050265
(87) Internationale Veröffentlichungsnummer: WO 2015/066745

(56) Entgegenhaltungen:
- WO-A1-2004/067416
- DE-A1-102004 043 197
- DE-A1-102010 002 758

## Beschreibung

Die Erfindung betrifft ein Verfahren zum Adressieren zumindest einer Steuerkomponente aus einer Gruppe mehrerer linear verketteter Steuerkomponenten einer Förderanlage sowie zum Feststellen des Rangs zumindest einer Steuerkomponente aus einer Gruppe mehrerer linear verketteter Steuerkomponenten einer Förderanlage. Weiterhin betrifft die Erfindung eine Förderanlage, auf der ein solches Verfahren durchführbar ist.

Nach dem Stand der Technik werden die Steuerkomponenten einer Förderanlage unter anderem auch mit Hilfe einer eindeutigen Adresse über ein Bussystem angesprochen. In bekannter Weise sendet eine Steuerung dazu eine Nachricht über den Bus, welche mit dem Adressaten versehen ist. Die am Bus angeschlossenen Teilnehmer prüfen, ob eine eingehende Nachricht für sie bestimmt ist, in dem sie den besagten Adressaten mit ihrer eigenen Adresse vergleichen. Auf diese Weise ist sichergestellt, dass eine Steuerkomponente einer Förderanlage gezielt angesprochen werden kann.

Problematisch ist dabei, dass eine Busadresse üblicherweise nichts über den physischen Standort der Steuerkomponente aussagt. Müssen Steuerkomponenten in einer bestimmten Abfolge angesteuert werden, so sind daher besondere Vorkehrungen zu treffen. Beispielsweise betrifft dies physisch hintereinander liegende Förderrollen in einer Förderanlage, deren Busadressen ohne besondere Vorkehrungen aber "bunt gemischt" sind.

Zur Lösung dieses Problems offenbart die US 2004/0195078 A1 ein Verfahren, mit dem hintereinander liegende Förderrollen entsprechend ihrer physischen Reihenfolge adressiert werden können. Dazu sind die Steuerungen der Förderrollen mit einer "Daisy-Chain-Leitung" in Serie untereinander verbunden, beziehungsweise linear verkettet. Der Adressierungsvorgang startet nun an einem Ende der Kette und läuft bis ans Ende derselben, wobei ein Signal über die Daisy-Chain-Leitung sukzessive von einer Steuerung zur nächsten weitergereicht wird. Durch dieses "Weiterreichen" wird einer übergeordneten Steuerung ermöglicht, die physische Reihenfolge der Förderrollen festzustellen.

Nachteilig ist daran, dass die Verbindung einer übergeordneten Steuerung mit einem Ende der Daisy-Chain-Leitung in der Realität mitunter schwierig ist. Ist das Anordnen der übergeordneten Steuerung in der unmittelbaren Nähe eines Endes der Daisy-Chain-Leitung zum Beispiel aus baulichen Gründen nicht möglich, so muss eine extra Leitung aufwändig verlegt werden. Abgesehen vom fertigungstechnischen Aufwand ist eine solche Verlegung allein schon aufgrund der Kabellänge und der darüber eingestreuten Störungen fehleranfällig.

Eine Aufgabe ist es daher, ein Verfahren beziehungsweise eine Förderanlage anzugeben, bei der ein Adressierungsvorgang von Steuerkomponenten respektive die Erfassung einer physischen Reihenfolge derselben flexibel durchgeführt werden kann. Insbesondere sollen die oben erwähnten Nachteile vermieden werden.

Die Aufgabe der Erfindung wird mit einem Verfahren zum Adressieren von Steuerkomponenten einer Gruppe mehrerer linear verketteter Steuerkomponenten einer Förderanlage nach einem der Patentansprüche 1 oder 2 gelöst sowie mit einer Förderanlage zum Transport von Förderobjekten, beispielsweise Behältern, nach einem der Patentansprüche 14 oder 15.

Vorteilhaft ist das Anordnen einer übergeordneten Steuerung in der unmittelbaren Nähe eines Endes der Daisy-Chain-Leitung beziehungsweise eine aufwändige Verkabelung zu demselben aufgrund der vorgeschlagenen Maßnahmen nicht mehr nötig. Ein Adressierungsvorgang von Steuerkomponenten respektive die Erfassung einer physischen Reihenfolge derselben kann somit flexibel durchgeführt werden. Die Verkabelung ist auch weniger fehleranfällig. Insbesondere - aber nicht nur - bezieht sich das vorgeschlagene Verfahren beziehungsweise die vorgeschlagene Förderanlage auf die Adressierung von Steuerkomponenten einer Vielzahl von Förderrollen der Förderanlage.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn das Zuweisen einer Adresse zu beziehungsweise ein Auslesen einer Adresse aus einer Steuerkomponente über einen Kommunikationsbus erfolgt, an den alle Steuerkomponenten der Gruppe gleichwertig angeschlossen sind. Gleichermaßen ist es vorteilhaft, wenn die Förderanlage einen Kommunikationsbus aufweist, welcher die Steuerkomponenten untereinander beziehungsweise mit der übergeordneten Steuerung verbindet. Auf diese Weise können die Steuerkomponenten mit der übergeordneten Steuerung beziehungsweise untereinander vergleichsweise komplexe Nachrichten austauschen. Beispielsweise kann der Kommunikationsbus als CAN-Bus ausgeführt sein.

Günstig ist es, wenn das Zuweisen einer Adresse und/oder das Speichern der Reihenfolge ungeordnet zugewiesener Adressen im Zuge der Adressierung von Steuerkomponenten durch eine übergeordnete Steuerung gesteuert wird/werden. Günstig ist es gleichermaßen, wenn die Förderanlage eine übergeordnete Steuerung zum Steuern des Adressierungsvorgangs der genannten Steuerkomponenten aufweist. Dadurch brauchen die Steuerkomponenten keine Mittel zur Koordination des Adressierungsvorgangs aufweisen und können demzufolge einfacher aufgebaut sein.

Zu diesem Zweck kann die übergeordnete Steuerung auch
- Mittel zum Zuweisen aufsteigender/absteigender Adressen an die schrittweise adressierten Steuerkomponenten und/oder zum Speichern einer Reihenfolge von ungeordnet zu den Steuerkomponenten zugewiesenen Adressen und
- Mittel zum aufsteigenden/absteigenden Adressieren aller Steuerkomponenten der Gruppe entsprechend ihrer Reihenfolge in der genannten Kette anhand des schrittweisen Adressierungsvorgangs oder zum Zuordnen aller zugewiesenen Adressen zu der genannten Reihenfolge aufweisen.

Vorteilhaft ist es, wenn für die Auswahl einer aktuell zu adressierenden Steuerkomponente ein dafür vorgesehenes Signal über die Daisy-Chain-Auswahlleitung an die genannte Steuerkomponente gesendet beziehungsweise angelegt wird und dieses nach erfolgreicher Adressierung an jene benachbarte Steuerkomponente weitergeleitet wird, welche im Fall a) in Richtung des ersten Endes der genannten Kette und im Fall b) in Richtung des zweiten Endes der genannten Kette nachfolgt. Auf diese Weise können die Steuerkomponenten sukzessive entsprechend ihrer physischen Reihenfolge adressiert werden beziehungsweise deren Reihenfolge erfasst werden.

Vorteilhaft ist es, wenn das Weiterleiten des genannten Signals durch Schließen eines die Daisy-Chain-Auswahlleitung unterbrechenden Schalters erfolgt. Auf diese Weise braucht die Steuerkomponente keine Mittel zur Erzeugung des Auswahlsignals aufweisen.

Vorteilhaft ist es aber auch, wenn das Weiterleiten des genannten Signals durch aktives Erzeugen desselben erfolgt. Dadurch kann ein Schalter zum Verbinden der einzelnen Teilstücke der Daisy-Chain-Auswahlleitung entfallen.

Günstig ist es, wenn Schritt a) durch Senden/Anlegen eines Signals zum Starten eines Adressierungsvorgangs über einen ersten Zweig der zwischen zwei Steuerkomponenten unterbrochenen Daisy-Chain-Auswahlleitung und Schritt b) durch Senden/Anlegen eines Signals zum Starten eines Adressierungsvorgangs über den zweiten Zweig der zwischen zwei Steuerkomponenten unterbrochenen Daisy-Chain-Auswahlleitung gestartet werden. Günstig ist es in diesem Zusammenhang, wenn die genannten Signale von einer übergeordneten Steuerung gesendet/angelegt werden, die mit den beiden Zweigen der Daisy-Chain-Auswahlleitung verbunden ist. Gleichermaßen ist es günstig, wenn die Daisy-Chain-Auswahlleitung zwischen zwei Steuerkomponenten unterbrochen ist und beide Enden derselben mit der übergeordneten Steuerung verbunden sind. Bei dieser Variante wird der Adressierungsvorgang also an einer physisch vorgegebenen Stelle der Kette der Steuerkomponenten gestartet. Das Adressierungsverfahren ist daher gut reproduzierbar.

Im obigen Zusammenhang umfasst das Verfahren zum Adressieren/Reihen zumindest einer Steuerkomponente aus einer Gruppe mehrerer linear verketteter Steuerkomponenten einer Förderanlage in einer vorteilhaften Variante die Schritte:
a) Senden eines Signals zum Starten eines Adressierungsvorgangs über eine Daisy-Chain-Auswahlleitung von einer übergeordneten Steuerung an eine bestimmte Steuerkomponente der Gruppe,
b) Senden eines Befehls zum Starten eines Adressierungsvorgangs über einen Kommunikationsbus, an welchen die genannten Steuerkomponenten gleichwertig angeschlossen sind, durch die übergeordneten Steuerung,
c) Senden einer Bestätigung für die Bereitschaft zum Adressierungsvorgang über den Kommunikationsbus, von der Steuerkomponente, welche das Signals zum Starten eines Adressierungsvorgangs an einem mit der Daisy-Chain-Auswahlleitung verbundenen Eingang empfängt, an die übergeordnete Steuerung,
d) Senden einer Adresse über den Kommunikationsbus von der übergeordneten Steuerung an die im Schritt c) genannte Steuerkomponente, sofern die Bereitschaftsbestätigung in der übergeordneten Steuerung innerhalb einer vorbestimmten Zeit erhält, beziehungsweise Fortsetzen bei Schritt f), wenn dies nicht der Fall ist,
e) Senden einer Bestätigung für einen ausgeführten Adressierungsvorgang über den Kommunikationsbus von der im Schritt c) genannten Steuerkomponente an die übergeordnete Steuerung, Ausgeben eines Signals zum Starten des Adressierungsvorgangs an einem Ausgang, an welchem ein Segment der Daisy-Chain-Auswahlleitung angeschlossen ist, das dem in Schritt c) genannten Eingang bezüglich der linearen Kette gegenüberliegt, und Fortsetzen bei Schritt b),
f) Senden eines Signals zum Starten eines Adressierungsvorgangs über die Daisy-Chain-Auswahlleitung von der übergeordneten Steuerung an eine bestimmte Steuerkomponente der Gruppe, welche der in Schritt a) genannten Steuerkomponente bezüglich der linearen Kette gegenüberliegt und Fortsetzen bei Schritt b), sofern Schritt f) noch nicht ausgeführt wurde, beziehungsweise Fortsetzen bei Schritt g1) oder g2), wenn dies nicht der Fall ist,
g1) Aufsteigendes Adressieren der bis Schritt f) adressierten Steuerkomponenten in umgekehrter Reihenfolge oder
g2) Umkehren der bis Schritt f) gespeicherten Reihenfolge und Zuordnen der ungeordnet zugewiesenen Adressen zu der genannten, umgekehrten Reihenfolge und Zuordnen der ungeordnet zugewiesenen Adressen zu ab Schritt f) genannten Reihenfolge.

Der Vollständigkeit halber wird angemerkt, dass die bei diesem Verfahren genannten Schritte a) und b) nicht den Schritten a) und b) des weiter oben definierten Verfahrens entsprechen.

Günstig ist es weiterhin, wenn das Signal für die aktuell zu adressierende Steuerkomponente in Form einer Bitfolge, eines Spannungspegels, eines Strompegels oder einer Pegeländerung von Spannung und/oder Strom über die Daisy-Chain-Auswahlleitung gesendet beziehungsweise an diese angelegt wird. Auf diese Weise können leicht verfügbare Bausteine zur Signalerzeugung und/oder Signalerkennung für das offenbarte Adressierungsverfahren eingesetzt werden.

Generell ist es vorteilhaft, wenn alle Steuerkomponenten wenigstens eines Teils der Gruppe oder auch alle Steuerkomponenten der Gruppe vor Schritt a) mit für die Steuerkomponenten eindeutige Adressen ungeordnet beziehungsweise zufällig adressiert werden (sowohl bei dem durch die Schritte a) bis c2) definierten Verfahren als auch bei dem durch die Schritte a) bis g2) definierten Verfahren). Auf diese Weise können die Steuerkomponenten auch schon vor dem Ablaufen des vorgestellten Adressierungsvorgangs gezielt angesprochen werden.

Vorteilhaft ist es in diesem Zusammenhang, wenn Schritt a) bei der Steuerkomponente mit der niedrigsten/höchsten Adresse des genannten Teils der Gruppe beginnt oder wenn Schritt a) bei einer zufällig ausgewählten Steuerkomponente des genannten Teils der Gruppe beginnt. Bei beiden Varianten ist ein Anlegen eines Signals an die Daisy-Chain-Leitung nicht nötig. Eine übergeordnete Steuerung braucht in Folge dessen auch nicht mit der Daisy-Chain-Leitung verbunden sein und kann daher noch flexibler positioniert werden.

Im obigen Zusammenhang umfasst das Verfahren zum Adressieren/Reihen zumindest einer Steuerkomponente aus einer Gruppe mehrerer linear verketteter Steuerkomponenten einer Förderanlage in einer vorteilhaften Variante die Schritte:
a0) zufälliges beziehungsweise ungeordnetes Adressieren aller Steuerkomponenten der Gruppe mit für die Steuerkomponenten eindeutigen Adressen,
b0) Senden eines Befehls zum Starten eines Adressierungsvorgangs über einen Kommunikationsbus, an welchen die genannten Steuerkomponenten gleichwertig angeschlossen sind, von der übergeordneten Steuerung zu einer bestimmten Steuerkomponente, die von der übergeordneten Steuerung ausgewählt wird,
c0) Senden einer Bestätigung für die Bereitschaft zum Adressierungsvorgang über den Kommunikationsbus, von der in Schritt b0) genannten Steuerkomponente an die übergeordnete Steuerung und Fortsetzen bei Schritt d)
b) Senden eines Befehls zum Starten eines Adressierungsvorgangs über einen Kommunikationsbus, an welchen die genannten Steuerkomponenten gleichwertig angeschlossen sind, durch eine übergeordnete Steuerung,
c) Senden einer Bestätigung für die Bereitschaft zum Adressierungsvorgang über den Kommunikationsbus, von der Steuerkomponente, welche das Signals zum Starten eines Adressierungsvorgangs an einem mit der Daisy-Chain-Auswahlleitung verbundenen Eingang empfängt, an die übergeordnete Steuerung,
d) Senden einer Adresse über den Kommunikationsbus von der übergeordneten Steuerung an die im Schritt c) beziehungsweise c0) genannte Steuerkomponente, sofern die Bereitschaftsbestätigung in der übergeordneten Steuerung innerhalb einer vorbestimmten Zeit erhält, beziehungsweise Fortsetzen bei Schritt f), wenn dies nicht der Fall ist,
e) Senden einer Bestätigung für einen ausgeführten Adressierungsvorgang über den Kommunikationsbus von der im Schritt c) beziehungsweise c0) genannten Steuerkomponente an die übergeordnete Steuerung, Ausgeben eines Signals zum Starten des Adressierungsvorgangs an einem Ausgang, an welchem ein Segment der Daisy-Chain-Auswahlleitung angeschlossen ist, das dem in Schritt c) beziehungsweise c0) genannten Eingang bezüglich der linearen Kette gegenüberliegt, und Fortsetzen bei Schritt b),
f) Senden eines Signals zum Starten eines Adressierungsvorgangs über die Daisy-Chain-Auswahlleitung von der übergeordneten Steuerung an eine bestimmte Steuerkomponente der Gruppe, welche der in Schritt a) beziehungsweise b0) genannten Steuerkomponente bezüglich der linearen Kette gegenüberliegt und Fortsetzen bei Schritt b), sofern Schritt f) noch nicht ausgeführt wurde, beziehungsweise Fortsetzen bei Schritt g1) oder g2), wenn dies nicht der Fall ist,
g1) Aufsteigendes Adressieren der bis Schritt f) adressierten Steuerkomponenten in umgekehrter Reihenfolge oder
g2) Umkehren der bis Schritt f) gespeicherten Reihenfolge und Zuordnen der ungeordnet zugewiesenen Adressen zu der genannten, umgekehrten Reihenfolge und Zuordnen der ungeordnet zugewiesenen Adressen zu der ab Schritt f) genannten Reihenfolge.

Günstig ist es, wenn eine Steuerkomponente eine Antriebssteuerung für eine Förderrolle der Förderanlage umfasst, da die Vorteile des vorgestellten Verfahren beziehungsweise der Förderanlage besonders zu Tage treten.

An dieser Stelle wird angemerkt, dass sich die zum vorgestellten Verfahren offenbarten Ausführungsvarianten und die daraus resultierenden Vorteile gleichermaßen auf die vorgestellte Förderanlage beziehen und umgekehrt.

Zum besseren Verständnis der Erfindung wird diese anhand der nachfolgenden Figuren näher erläutert.

Es zeigen jeweils:
- Fig. 1: einen beispielhaften Ausschnitt aus einer Förderanlage 1 von schräg oben;
- Fig. 2: wie Fig. 1, nur von schräg hinten;
- Fig. 3: wie Fig. 1, nur von schräg unten;
- Fig. 4: ein beispielhaftes Blockschaltbild einer Förderanlage;
- Fig. 5: linear verkettete Steuerkomponenten, in denen eine Daisy-Chain-Leitung mit einem steuerbaren Schalter unterbrochen ist;
- Fig. 6: wie Fig. 5, nur mit eindeutig bezeichneten Steuerkomponenten beziehungsweise Schaltern in einem ersten Zustand;
- Fig. 7: wie Fig. 6 nur mit einem bereits geschlossenen Schalter;
- Fig. 8: wie Fig. 6 nur mit zwei bereits geschlossenen Schaltern;
- Fig. 9: linear verkettete Steuerkomponenten, in denen eine Daisy-Chain-Leitung mit Signalein-/ausgängen der Steuerkomponente verbunden ist;
- Fig. 10: linear verkettete Steuerkomponenten, bei denen eine übergeordnete Steuerung nicht mit der Daisy-Chain-Leitung verbunden ist und
- Fig. 11: eine schematische Darstellung eines Adressierungsvorgangs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

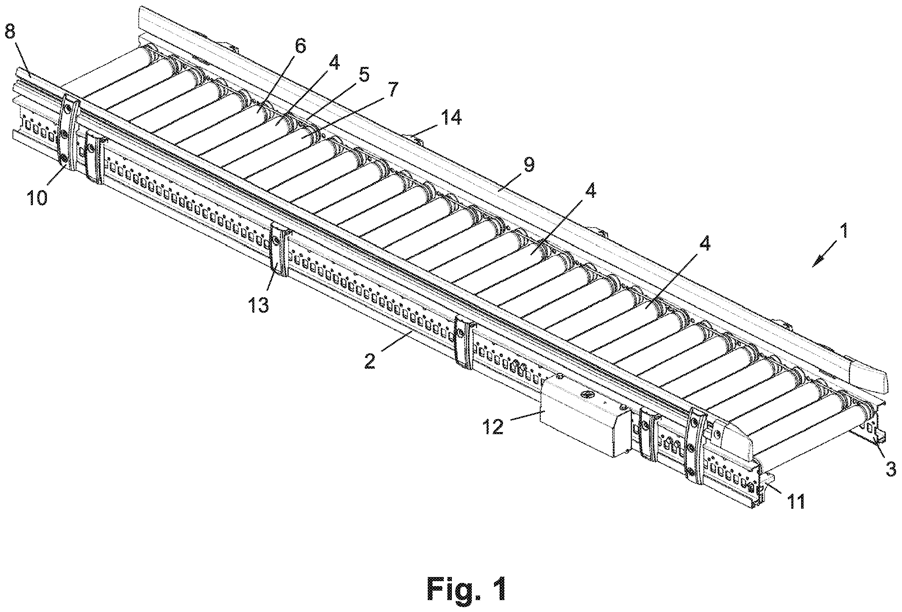

Fig. 1 zeigt einen beispielhaften Ausschnitt aus einer Förderanlage 1 von schräg oben. Die Förderanlage 1 umfasst zwei voneinander beabstandet verlaufende Rahmenprofile 2 und 3 sowie mehrere dazwischen angeordnete, motorisierte Förderrollen 4. Über Riemen 5 können weitere nicht motorisierte Förderrollen 6 und 7 mit angetrieben werden. Selbstverständlich ist es keine zwingende Bedingung, dass alle Förderrollen der Förderanlage 1 direkt oder indirekt angetrieben sind, sondern es können auch leerlaufende Rollen zwischen den Rahmenprofilen 2 und 3 angeordnet sein. Denkbar wäre auch, dass ein Förderband oder Gurt über die Förderrollen 4, 6, 7 gelegt wird. Insbesondere kann die motorisierte Förderrolle 4 dabei am Ende des Förderbands oder Gurts angeordnet sein, da der Umschlingungswinkel des Bands bzw. des Gurts dort groß ist. Ein gesonderter Riemen 5 kann bei Verwendung eines Bands oder Gurts entfallen.

Weiterhin umfasst die Förderanlage 1 optionale Führungsschienen 8 und 9, welche über Montagebügel 10 an den Rahmenprofilen 2 und 3 befestigt sind. Diese dienen der besseren seitlichen Führung der auf der Förderanlage 1 beförderten Objekte, z.B. Behälter, Tablare und Kartonagen.

Die motorisierten Förderrollen 4 sind über Anschlussboxen 11 an einen Energieversorgungsbus und einen Datenbus angeschlossen. Die Steuerung der Förderrollen 4 erfolgt über die Steuerung 12. Zur Detektion von Förderobjekten können im Verlauf der Rahmenprofile 2 und 3 auch Photodetektoren 13 angeordnet sein. Gegenüberliegend sind in diesem Beispiel zusätzlich Reflektoren 14 angeordnet.

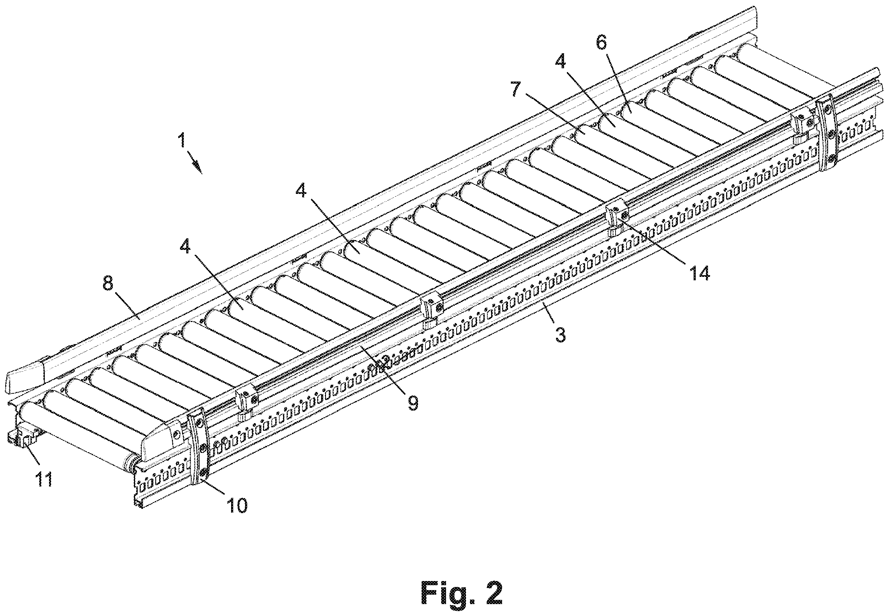

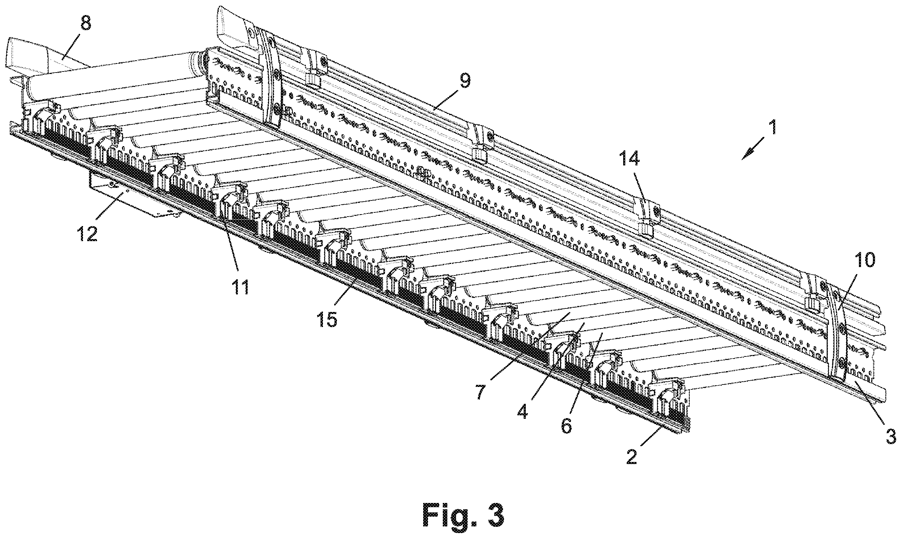

Die Fig. 2 zeigt die bereits in Fig. 1 dargestellte Förderanlage 1 nun von schräg hinten, die Fig. 3 von schräg unten. In der Fig. 3 ist daher zusätzlich auch der am Rahmenprofil 2 innenliegend verlegte Energieversorgungsbus 15 (beispielsweise mit einer Versorgungsspannung von 24V beziehungsweise 48V) zu sehen.

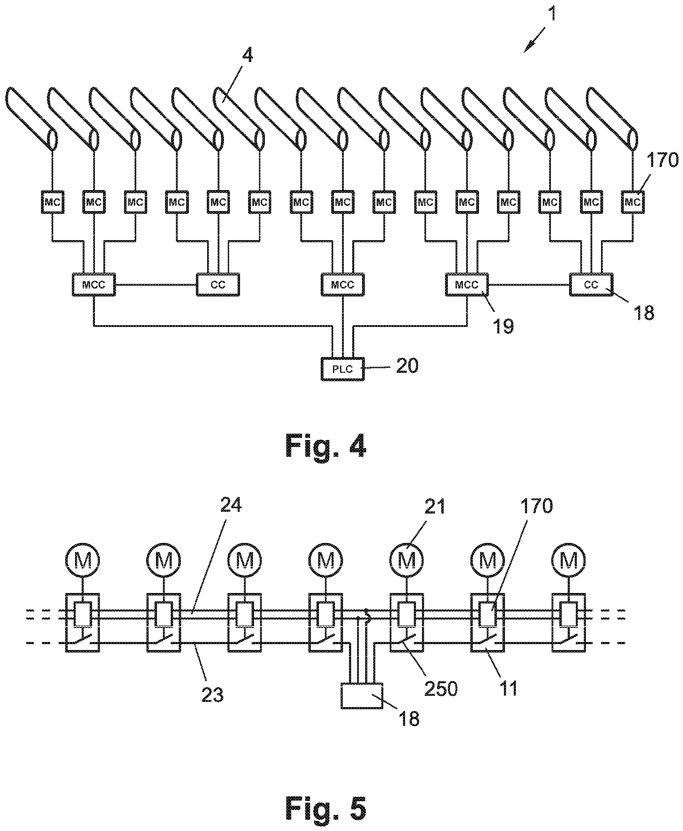

Die Fig. 4 zeigt ein beispielhaftes Blockschaltbild der Förderanlage 1 mit mehreren hintereinander angeordneten und motorisch angetriebenen Förderrollen 4. Zwischen diesen könnten natürlich auch noch weitere nicht angetriebene Förderrollen 6, 7 angeordnet sein, so wie dies in den Figuren 1 bis 3 dargestellt ist.

Jeder motorisierten Förderrolle 4 ist in diesem Beispiel ein Motor Controller 170 zugeordnet (wie in der Fig. 4 mit "MC" bezeichnet). Mehrere Motor Controller 170 sind (z.B. über einen CAN-Bus) mit einem Conveyor Controller 18 (wie in der Fig. 4 mit "CC") bezeichnet) oder einem Master Conveyor Controller 19 (wie in der Fig. 4 mit "MCC") bezeichnet) verbunden. Die Master Conveyor Controller 19 haben generell den Zweck, aus den Befehlen einer zentralen Steuerung 20 (wie in der Fig. 4 mit "PLC" bezeichnet) die nötigen Anweisungen an die Motor Controller 170 der einzelnen Förderrollen 4 zu ermitteln, beziehungsweise Statusmeldungen derselben zu empfangen und Informationen über Statusmeldungen weiter bis zur zentralen Steuerung 20 zu leiten. Beispielsweise kann die in den Figuren 1 bis 3 dargestellte Steuerung 12 durch einen Conveyor Controller 18, einen Master Conveyor Controller 19 oder auch durch die zentrale Steuerung 20 gebildet sein.

An die Master Conveyor Controller 19 sind aber nicht nur Motor Controller 170, sondern (beispielsweise via Ethernet) auch Conveyor Controller 18 angeschlossen. Diese sind völlig gleichwertig mit den Master Conveyor Controllern 19, bis auf den Umstand, dass nur der Master Conveyor Controller 19 direkt (z.B. über Ethernet oder Profibus) mit der zentralen Steuerung 20 verbunden ist und mit dieser kommuniziert. Somit übernimmt einzig der Master Conveyor Controller 19 Befehle von der zentralen Steuerung 20 und generiert gegebenenfalls Befehle an die Conveyor Controller 18 respektive transferiert Informationen von den Conveyor Controllern 18 an die zentrale Steuerung 20 weiter. Die Förderrolle 4 selbst umfasst in dieser Hierarchie in elektrischer Hinsicht lediglich den Motor, einen Temperatursensor und Hallsensoren, und ist an einen Motor Controller 170 angeschlossen.

Die Motor Controller 170 der einzelnen Förderrollen 4 sind untereinander mit Kabeln verbunden, welche zumindest eine Ader für eine Daisy-Chain-Leitung, sowie zwei Adern für einen Datenbus aufweisen.

Die Fig. 5 zeigt dazu eine beispielhafte Anordnung, bei der mehrere Motoren 21 (wie in der Fig. 5 mit "M" bezeichnet) der Förderrollen 4 jeweils mit einer Anschlussbox 11 elektrisch verbunden sind. Diese Anschlussbox 11 umfasst den Motor Controller 170 und kann auch noch weitere Komponenten aufweisen, beispielsweise die Möglichkeit zum Anschluss von Lichtschranken 13, Schaltern und dergleichen sowie insbesondere auch eine Möglichkeit zum Anschluss einer Energieversorgung 15 (siehe Fig. 1 bis 3), die aber aus Gründen der besseren Übersicht in der Fig. 5 nicht dargestellt ist. Die Anschlussboxen 11 respektive die Motor Controller 170 sind untereinander über eine Daisy-Chain-Leitung 23 sowie über einen Datenbus 24 verbunden. Wie aus der Fig. 5 ersichtlich ist, ist die Daisy-Chain-Leitung 23 innerhalb der Anschlussboxen 11 jeweils durch einen Schalter 250 getrennt, der über den Motor Controller 170 angesteuert werden kann. In der Fig. 5 ist aus Gründen der Übersicht ein einziger Conveyor Controller 18 dargestellt, welche mit den Motor Controllern 170 verbunden ist. Selbstverständlich könnte gleichwertig auch ein Master Conveyor Controller 19 anstelle des Conveyor Controllers 18 vorgesehen sein, welcher mit den Motor Controllern 170 verbunden ist. Selbstverständlich könnte aber auch die in Fig. 4 dargestellte Hierarchie umgesetzt sein. Der Conveyor Controller 18 ist in diesem Beispiel an die Daisy-Chain-Leitung 23 und auch den Datenbus 24 angeschlossen.

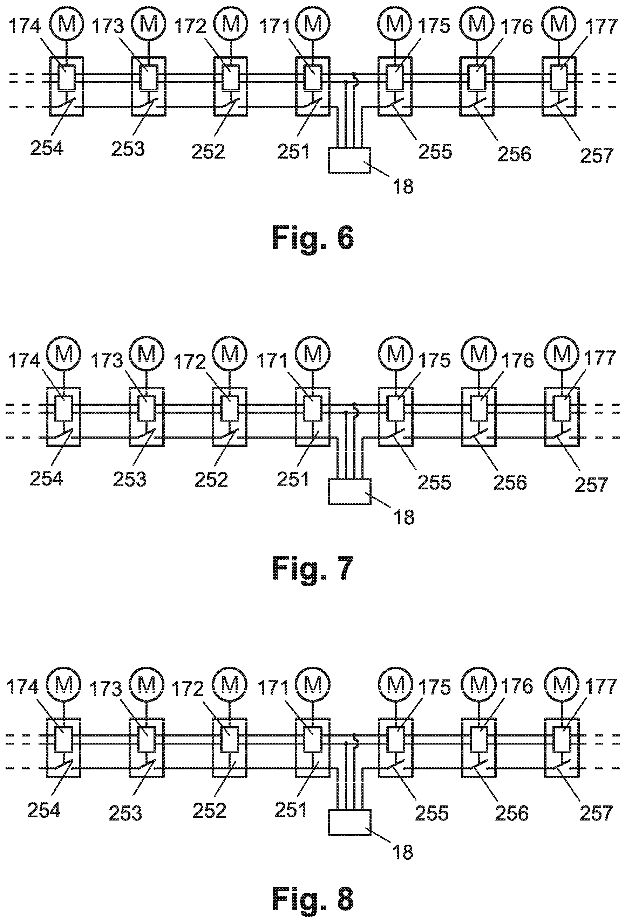

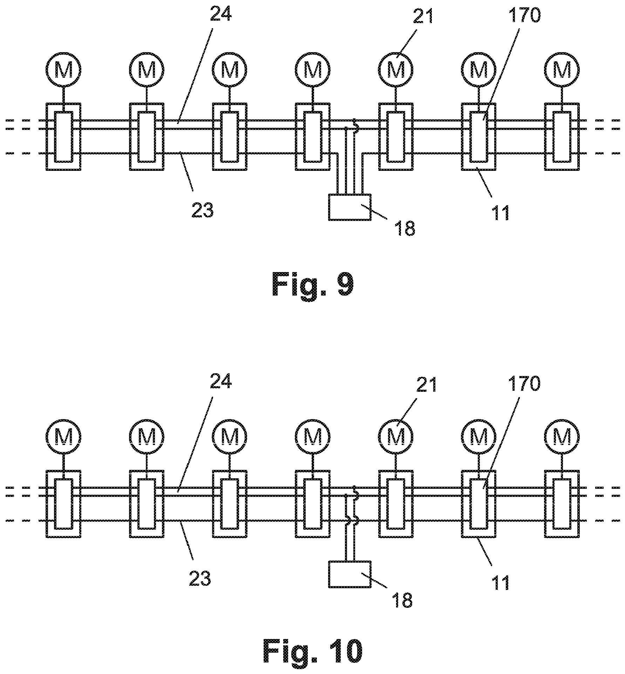

Die Funktion der in den Figuren 4 beziehungsweise 5 dargestellten Anordnung wird anhand der Figuren 6 bis 8 nun näher erläutert. Beispielhaft ist dort der Conveyor Controller 18 dargestellt. Stattdessen kann gleichwertig auch der Master Conveyor Controller 19 oder die zentrale Steuerung 20 verwendet werden (dasselbe gilt auch für die Ausführungen nach den Figuren 9 und 10).

Jeder Motor Controller 171..177 hat eine effektive Busadresse, mit welcher eingehende Nachrichten gefiltert und ausgehende Nachrichten versendet werden. Zusätzlich hat jeder Motor Controller 171..177 eine zugewiesene Adresse, welche in einem nichtflüchtigen Speicher abgelegt ist. Diese Adresse wird mit dem Übergang von einem Initialzustand in einen Normalzustand zur effektiven Adresse.

Im Initialzustand reagieren die Motor Controller 171..177 nur auf ein Bus-Reset-Telegramm und ignorieren alle anderen CAN-Nachrichten. Gleichzeitig überprüfen sie ob auf der Daisy-Chain-Leitung 23 ein Pegel-Übergang von "low" auf "high" erfolgt. Bevorzugt sollte das betreffende Signal eine bestimmte Zeit auf "high" bleiben, um Störungen auf der Daisy-Chain-Leitung 23 zu ignorieren. Wenn der genannte low-high-Übergang aufgetreten ist, so ist jener Motor Controller 171..177 selektiert, der den Pegel-Übergang detektiert hat. In der Fig. 6 ist dies der Motor Controller 171, da angenommen wird, dass der Conveyor Controller 18 das genannte Signal nur an den linken Ast der Daisy-Chain-Leitung 23 anlegt. Der Motor Controller 171 nimmt nun die Default-Adresse (z.B. "127") als effektive Adresse an und reagiert in Folge auf CAN-Nachrichten. Die Schalter 251..257 und insbesondere der Schalter 251 bleiben vorerst offen.

Nun kann der Conveyor Controller 18 respektive der Master Conveyor Controller 19 über die Default-Adresse normal auf den selektierten Motor Controller 171 zugreifen und z.B. die zugewiesene Adresse abfragen, beziehungsweise diese ändern. Mit einer fallenden Flanke auf der Daisy-Chain-Leitung 23, also einem Übergang von "high" auf "low" nimmt der Motor Controller 171 die zugewiesene Adresse auch als effektive Adresse an und geht in den Normalzustand über.

Von den Motor Controllern 171..177, welche noch im Initialzustand sind, reagiert also nur der erste auf die Default-Adresse, weil er über das Signal auf der Daisy-Chain-Leitung 23 selektiert ist und über den Schalter 251 dafür sorgt, dass der verbleibende Rest der Kette nicht selektiert ist. Motor Controller 171..177, die sich bereits im Normalzustand und nicht mehr im Initialzustand befinden, haben als effektive Adresse dagegen schon die zugewiesene Adresse angenommen und reagieren damit nicht mehr auf die Default-Adresse.

Im Normalzustand, in dem der Schalter 251 geschlossen ist, wird das Signal auf der Daisy-Chain-Leitung 23 an den nächsten Motor Controller 172 in der Kette übertragen. Damit kann nun der Conveyor Controller 18 den nächsten Motor Controller 172 in der Kette über die Daisy-Chain-Leitung 23 selektieren und diesen über den CAN Bus mit der Default-Adresse (z.B. "127") ansprechen. Dieser Zustand ist in der Fig. 7 dargestellt.

Fig. 8 zeigt einen weiteren Zustand, in dem die Motor Controller 171, 172, 173 bereits adressiert und die Schalter 251 und 252 geschlossen sind. Der genannte Adressierungsvorgang wird so lange rekursiv wiederholt, bis alle Motor Controller 171..177 in der Kette adressiert sind und sich im Normalzustand befinden.

Das Ende der Kette kann beispielsweise dadurch festgestellt werden, dass sich auf einen Adressierungsbefehl des Conveyor Controllers 18 innerhalb einer vorgegebenen Zeit kein Motor Controller 171..177 mehr meldet (Timeout). Im konkreten Beispiel bedeutet dies, dass ein Signal auf der Daisy-Chain-Leitung 23 nach erfolgter Adressierung des Motor Controllers 174 "ins Leere" geht und kein Motor Controller 171..177 mehr auf einen Befehl zur Adressierung antwortet.

Tritt dieser Fall ein, wird der rechte Ast der Kette daraufhin in ganz ähnlicher Weise adressiert. Durch Anlegen des bereits oben angeführten Signals an den rechten Ast der Daisy-Chain-Leitung 23 werden nun sukzessive die Motor Controller 175, 176 und 177 adressiert.

Ganz allgemein wird also Verfahren zum Adressieren/Reihen zumindest einer Steuerkomponente 170..177 aus einer Gruppe mehrerer linear verketteter Steuerkomponenten 170..177 einer Förderanlage 1 durchgeführt, das folgende Schritte umfasst:
a) Schrittweises Adressieren von Steuerkomponenten 171..174, welche ausgehend von einer beliebigen Steuerkomponente 171 bis zu einem ersten Ende der genannten Kette angeordnet sind, mit Hilfe einer Daisy-Chain-Auswahlleitung 23,
b) Schrittweises Adressieren der Steuerkomponenten 175..177, welche ausgehend von jener Steuerkomponente 175, die der in Schritt a) genannten Steuerkomponente 171 bezüglich des ersten Endes der linearen Kette gegenüberliegt, bis zum zweiten Ende der genannten Kette angeordnet sind, mit Hilfe der Daisy-Chain-Auswahlleitung 23.

Beim Adressieren können generell aufsteigende/absteigende Adressen zugewiesen werden und/oder die Reihenfolge ungeordnet zugewiesener Adressen gespeichert werden. Konkret bedeutet dies, dass die Motor Controller 171..177 mit aufsteigenden/absteigenden Adressen durchadressiert werden oder dass ungeordnet vorgegebene oder auch zufällige Adressen vergeben werden und die Position eines Motor Controllers 171..177 (das heißt dessen Rang in der Reihenfolge der Gruppe der Motor Controller 171..177) beispielsweise in einer Tabelle vermerkt wird. Angemerkt wird an dieser Stelle, dass beim aufsteigenden/absteigenden Adressieren nicht zwangsläufig um 1 inkrementierte/dekrementierte Adressen vergeben werden müssen. Stattdessen können auch andere Inkremente/Dekremente verwendet werden. Beispielsweise sind die Adressen 17, 25, 45, 98 nicht jeweils um 1 steigend, sind jedoch dennoch eindeutig und geben auch eine Abfolge bzw. Reihenfolge von Motor Controllern 171..177 korrekt wider. Ähnliches gilt für die in einer Tabelle vermerkte Reihenfolge.

Nach der Adressierung der Motor Controller 171..177 der beiden Äste brauchen diese nur mehr in die richtige Reihenfolge gebracht werden. Dazu wird entweder die Reihung des linken oder des rechten Astes umgekehrt, wodurch dann alle Motor Controller 171..177 in aufsteigender/absteigender oder absteigender Reihenfolge adressiert beziehungsweise gereiht sind.

Ganz allgemein, werden nachfolgend auf die Schritte a) und b) somit folgende Schritte ausgeführt:
c1) Aufsteigendes/absteigendes Adressieren der in Schritt a) adressierten Steuerkomponenten 171..174 in umgekehrter Reihenfolge oder
c2) Umkehren der in Schritt a) gespeicherten Reihenfolge und Zuordnen der ungeordnet zugewiesenen Adressen 171..177 zu der genannten, umgekehrten Reihenfolge und Zuordnen der ungeordnet zugewiesenen Adressen 171..177 zu der in Schritt b) genannten Reihenfolge.

Schritt c1) betrifft eine Ausführungsvariante, bei der die Motor Controller 171..177 direkt mit aufsteigenden/absteigenden Adressen adressiert werden. Schritt c2) betrifft eine Variante, bei der ungeordnet vorgegebene oder auch zufällige Adressen vergeben werden und die Position eines Motor Controllers 171..177 beispielsweise in einer Tabelle vermerkt wird.

Zur Durchführung der Schritte c1) oder c2) wird im Conveyor Controller 18 während des Adressierens beispielsweise vermerkt, welcher Motor Controller 171..177 zu welchem Ast gehört, etwa mit Hilfe eines Statusbits, das in einer Tabelle gesetzt wird. Denkbar wäre auch, dass die Anfangsadresse und/oder Endadresse eines Asts im Conveyor Controllern 18 abgespeichert wird.

Generell ist es auch möglich, dass die vorgestellte Auto-Adressierung übersprungen werden kann oder eine andere Adressierung nachfolgend durchgeführt wird, sofern die Reihung der Motor Controller 171..177 auf andere Weise als angegeben festgelegt wird. Das Bus-Reset-Telegramm weist dazu einen Parameter auf, welcher den Wert "skip-auto-addressing" oder "do-auto-addressing" annehmen kann. Durch dieses Telegramm fällt jeder Motor Controller 171..177 in den Initialzustand zurück, egal in welchem Zustand er sich gerade befindet. Wenn der Parameter "skip-auto-adressing" gesetzt ist, nimmt jeder Motor Controller 171..177 sofort die zugewiesene Adresse als effektive Adresse an und wechselt in den Normalzustand. Auf diese Weise ist es möglich, nach dem Hochfahren der Förderanlage 1 schneller in den Normalzustand zu gelangen. Des Weiteren können eventuell bei der Auto-Adressierung auftretende Probleme, welche zum Beispiel durch Fehler in der Verkabelung verursacht sind, temporär übergangen werden, damit die Steuerung der Förderanlage 1 bis zum nächsten Wartungsintervall funktionsfähig bleibt.

Die Adressierung der Master Conveyor Controller 19 und Conveyor Controller 18 selbst kann manuell über ein Ini-File erfolgen, das auf einer SD-Memory-Card (Secure Digital Memory Card) abgespeichert und in den Conveyor Controller 18 beziehungsweise Master Conveyor Controller 19 eingeschoben wird.

Generell weist das in den Figuren 5 bis 8 vorgestellte Verfahren folgende Merkmale auf:
- Das Zuweisen einer Adresse zu beziehungsweise ein Auslesen einer Adresse aus einer Steuerkomponente 170..177 erfolgt über einen Kommunikationsbus 24, an den alle Steuerkomponenten 170..177 der Gruppe gleichwertig angeschlossen sind.
- Das Zuweisen einer Adresse und/oder das Speichern der Reihenfolge ungeordnet zugewiesener Adressen im Zuge der Adressierung von Steuerkomponenten 170..177 wird durch eine übergeordnete Steuerung 18, 19, 20 gesteuert.
- Für die Auswahl einer aktuell zu adressierenden Steuerkomponente 170..177 wird ein dafür vorgesehenes Signal über die Daisy-Chain-Auswahlleitung 23 an die genannte Steuerkomponente 170..177 gesendet beziehungsweise angelegt, und dieses wird nach erfolgreicher Adressierung an jene benachbarte Steuerkomponente 175 weitergeleitet, welche im Fall a) in Richtung des ersten Endes der genannten Kette und im Fall b) in Richtung des zweiten Endes der genannten Kette nachfolgt.
- Das Weiterleiten des genannten Signals erfolgt durch Schließen eines die Daisy-Chain-Auswahlleitung 23 unterbrechenden Schalters 250..257.
- Schritt a) wird durch Senden/Anlegen eines Signals zum Starten eines Adressierungsvorgangs über einen ersten Zweig der zwischen zwei Steuerkomponenten 170..177 unterbrochen Daisy-Chain-Auswahlleitung 23 und Schritt b) durch Senden/Anlegen eines Signals zum Starten eines Adressierungsvorgangs über den zweiten Zweig der zwischen zwei Steuerkomponenten 170..177 unterbrochen Daisy-Chain-Auswahlleitung 23 gestartet.
- Die genannten Signale werden von einer übergeordneten Steuerung 18, 19, 20 gesendet/angelegt, die mit den beiden Zweigen der Daisy-Chain-Auswahlleitung 23 verbunden ist.
- Das Signal für die aktuell zu adressierende Steuerkomponente 170..177 wird in einer Pegeländerung der Spannung auf der Daisy-Chain-Auswahlleitung 23 gesendet beziehungsweise angelegt. Gleichwertig ist vorstellbar, dass das Signal für die aktuell zu adressierende Steuerkomponente 170..177 in Form einer Bitfolge, eines Spannungspegels, eines Strompegels oder einer Pegeländerung eines Stroms über die Daisy-Chain-Auswahlleitung 23 gesendet beziehungsweise an diese angelegt wird.
- Keine der Steuerkomponenten 170..177 der Gruppe ist vor Schritt a) adressiert, beziehungsweise sind die genannten Steuerkomponenten 170..177 mit Adressen adressiert, die nicht eindeutig sind. Denkbar ist aber auch, dass alle Steuerkomponenten 170..177 wenigstens eines Teils der Gruppe vor Schritt a) mit für die Steuerkomponenten 170..177 eindeutigen Adressen ungeordnet beziehungsweise zufällig adressiert werden.

Generell weist die in den Figuren 1 bis 8 vorgestellte Förderanlage 1 somit unter anderem folgende Merkmale auf. Die Förderanlage umfasst:
- eine Gruppe mehrerer mit Hilfe einer Daisy-Chain-Auswahlleitung 23 linear verketteter Steuerkomponenten 170..177,
- Mittel zum schrittweisen Adressieren von Steuerkomponenten 170..177, welche ausgehend von einer beliebigen Steuerkomponente 170..177 bis zu einem ersten und einem zweiten Ende der genannten Kette angeordnet sind, mit Hilfe der Daisy-Chain-Auswahlleitung 23,
- Mittel zum Zuweisen aufsteigender/absteigender Adressen an die schrittweise adressierten Steuerkomponenten 170..177 und/oder zum Speichern einer Reihenfolge von ungeordnet zu den Steuerkomponenten 170..177 zugewiesenen Adressen,
- Mittel zum aufsteigenden/absteigenden Adressieren aller Steuerkomponenten 170..177 der Gruppe entsprechend ihrer Reihenfolge in der genannten Kette anhand des schrittweisen Adressierungsvorgangs oder zum Zuordnen aller zugewiesenen Adressen zu der genannten Reihenfolge.

Generell weist die in den Figuren 5 bis 8 vorgestellte Förderanlage 1 zudem folgende Merkmale auf:
- Die Förderanlage umfasst eine übergeordnete Steuerung 18, 29, 20 zum Steuern des Adressierungsvorgangs der genannten Steuerkomponenten 170..177,
- Die Mittel zum Zuweisen aufsteigender/absteigender Adressen an die schrittweise adressierten Steuerkomponenten 170..177 und/oder zum Speichern einer Reihenfolge von ungeordnet zu den Steuerkomponenten 170..177 zugewiesenen Adressen sind in der übergeordneten Steuerung 18, 29, 20 integriert,
- Die Mittel zum aufsteigenden/absteigenden Adressieren aller Steuerkomponenten 170..177 der Gruppe entsprechend ihrer Reihenfolge in der genannten Kette anhand des schrittweisen Adressierungsvorgangs oder zum Zuordnen aller zugewiesenen Adressen zu der genannten Reihenfolge sind in der übergeordneten Steuerung 18, 29, 20 integriert,
- Die Daisy-Chain-Auswahlleitung 23 ist zwischen zwei Steuerkomponenten 170..177 unterbrochen, und beide Enden derselben sind mit der übergeordneten Steuerung 18, 29, 20 verbunden,
- Die Steuerkomponenten 170..177 sind untereinander beziehungsweise mit der übergeordneten Steuerung 18, 19, 20 durch einen Kommunikationsbus 24 verbunden,
- Die Steuerkomponente 170..177 umfasst eine Antriebssteuerung für eine Förderrolle 4 der Förderanlage 1.

Neben der oben vorgestellten Variante ist noch eine andere Ausführungsform der Adressierung vorstellbar, welche schematisch in Fig. 9 dargestellt ist. Dabei wird das Signal auf der Daisy-Chain-Auswahlleitung 23 nicht durch Schließen eines Schalters 250..257 weitergeleitet wird, sondern das "Weiterleiten" des genannten Signals erfolgt durch aktives Erzeugen desselben. Konkret umfasst der Motor Controller 170 dazu zwei Daisy-Chain-Anschlüsse, die als Eingang und/oder Ausgang fungieren können. Befindet sich der Motor Controller 170 im Initialzustand, so sind die Daisy-Chain-Anschlüsse als Eingang konfiguriert.

Im Initialzustand reagiert der Motor Controller 170 wiederum nur auf das Bus-Reset-Telegramm und ignoriert alle anderen CAN-Nachrichten. Gleichzeitig überprüft er, ob auf einem der Daisy-Chain-Anschlüsse ein Pegel-Übergang von "low" auf "high" erfolgt (und auch wiederum eine bestimmte Zeit auf high bleibt, um Störungen auf der Daisy-Chain-Leitung 23 zu ignorieren). Wenn der genannte low-high-Übergang aufgetreten ist, so ist jener Motor Controller 170 selektiert, der den Pegel-Übergang detektiert hat. Der Motor Controller 170 nimmt dazu wie bereits ausgeführt die Default-Adresse (z.B. "127") als effektive Adresse an und reagiert in Folge auf CAN-Nachrichten. Gleichzeitig konfiguriert er den anderen Daisy-Chain-Anschluss zum Ausgang und treibt den Pegel dort auf "low". Nun kann der Conveyor Controller 18 über die Default-Adresse normal auf den selektierten Motor Controller 170 zugreifen und z.B. die zugewiesene Adresse abfragen, beziehungsweise diese ändern. Mit der fallenden Flanke auf dem Daisy-Chain-Eingang nimmt der Motor Controller 170 die zugewiesene Adresse auch als effektive Adresse an und geht in den Normalzustand über. Abschließend wird der Pegel am Daisy-Chain-Ausgang auf "high" getrieben, wodurch der nächste Motor Controller 170 das für die Adressierung nötige Selektionssignal empfängt und der Vorgang von neuem durchgeführt werden kann. Der übrige Ablauf gestaltet sich analog zu dem in den Figuren 4 bis 8 beschriebenen Vorgang.

In der Fig. 10 ist eine weitere Variante des Adressierungsverfahrens gezeigt. Dabei erfolgt das Weiterleiten des Auswahlsignals auf der Daisy-Chain-Leitung 23 wie bei der in Fig. 9 gezeigten Variante durch aktives Erzeugen desselben. Konkret umfasst der Motor Controller 170 dazu wiederum zwei Daisy-Chain-Anschlüsse, die als Eingang und/oder Ausgang fungieren können.

Die Motor Controller 170 werden zu Beginn mit eindeutigen Adressen ausgestattet, das heißt jeder Motor Controller 170 kann gezielt angesprochen werden. Dabei können zum Beispiel aufsteigende (jedoch ungeordnete) Adressen oder auch zufällige Adressen vergeben werden. Die Motor Controller 170 befinden sich dabei nach wie vor im Initialzustand und konfigurieren beide Daisy-Chain-Anschlüsse demzufolge als Eingänge.

Zum Starten des Verfahrens sendet der Conveyor Controller 18 ein Startsignal an einen der Motor Controller 170. Beispielsweise kann dies der Motor Controller 170 mit der höchsten oder der niedrigsten Adresse oder ein zufällig ausgewählter der Motor Controller 170 sein. Für die Auswahl dieses ersten Motor Controllers 170 ist das Aussenden oder Anlegen eines Signals an die Daisy-Chain-Leitung 23 nicht erforderlich, sondern der genannte Motor Controller 170 wird einfach über seine eindeutige Adresse angesprochen.

Prinzipiell ist es für den Start des Verfahrens auch ausreichend, wenn ein (einziger der) Motor Controller 170 mit einer eindeutigen Adresse ausgestattet und das Verfahren dort gestartet wird. Die übrigen Motor Controller 170 können auch mit nicht eindeutigen Adressen ausgestattet werden oder sogar alle dieselbe Adresse aufweisen.

Der initial ausgewählte Motor Controller 170 konfiguriert nun einen der beiden Daisy-Chain-Anschlüsse als Ausgang und treibt den Pegel dort auf "low". Der Conveyor Controller 18 kann die dem Motor Controller 170 zugewiesene Adresse abfragen, beziehungsweise diese ändern. Anschließend setzt der Conveyor Controller 18 den selektierten Motor Controller 170 in den Normalzustand, woraufhin dieser den Pegel am gewählten Daisy-Chain-Ausgang auf "high" setzt. Dadurch empfängt der nächste Motor Controller 170 das für die Adressierung nötige Selektionssignal und der Adressierungsvorgang kann bis zum Ende der Kette in der schon beschriebenen Weise fortgesetzt werden. Wird das Ende der Kette erkannt (beispielsweise wie schon angesprochen über ein Timeout), so weist der Conveyor Controller 18 den ersten angesprochenen Motor Controller 170 an, auch den zweiten Daisy-Chain-Anschluss als Ausgang zu konfigurieren und dort eine low-high-Flanke zu erzeugen. Auf diese Weise kann die Adressierung auch in die andere Richtung in der schon beschriebenen Weise erfolgen.

Ganz allgemein weist das offenbarte Verfahren unter anderem folgende Merkmale auf:
- alle Steuerkomponenten 170..177 wenigstens eines Teils der Gruppe werden vor Schritt a) mit für die Steuerkomponenten 170..177 eindeutigen Adressen ungeordnet beziehungsweise zufällig adressiert,
- Schritt a) beginnt beispielsweise bei der Steuerkomponente 170..177 mit der niedrigsten/höchsten Adresse des genannten Teils der Gruppe,
- alternativ beginnt Schritt a) bei einer zufällig ausgewählten Steuerkomponente 170..177 des genannten Teils der Gruppe,
- alternativ wird wenigstens eine Steuerkomponente 170..177 mit einer eindeutigen Adresse ausgestattet, bei der Schritt a) beginnt,
- der Conveyor Controller 18 braucht nicht mit der Daisy-Chain-Leitung 23 verbunden zu sein.

Beim Adressieren können auch bei dieser Variante aufsteigende/absteigende Adressen zugewiesen werden und/oder die Reihenfolge ungeordnet zugewiesener Adressen gespeichert werden, insbesondere die Reihenfolge der vor Schritt a) initial vergebenen Adressen.

Nach der Adressierung der Motor Controller 171..177 der beiden Äste brauchen diese nur mehr in die richtige Reihenfolge gebracht werden, was in der bereits beschriebenen Weise erfolgen kann.

Zur Durchführung der Schritte c1) oder c2) wie oben beschrieben wird im Conveyor Controllern 18 während des Adressierens beispielsweise wiederum vermerkt, welcher Motor Controller 171..177 zu welchem Ast gehört, etwa mit Hilfe eines Statusbits, das in einer Tabelle gesetzt wird. Denkbar wäre auch, dass die Anfangsadresse und/oder Endadresse eines Asts im Conveyor Controllern 18 abgespeichert wird.

Sind die Motor Controller 171..177 bereits bei der Erfassung ihrer Reihung mit eindeutigen Adressen identifiziert, so braucht grundsätzlich keine Änderung der Adressen erfolgen, sofern die physische Reihenfolge beispielsweise in einer Tabelle vermerkt ist. Denkbar ist aber auch, dass die Motor Controller 171..177 im Schritt c2) entsprechend der gespeicherten Reihenfolge umadressiert werden und aufsteigende/absteigende Adressen vergeben werden.

Allen offenbarten Varianten ist gemein, das die Adressierung prinzipiell an einer beliebigen Stelle der verketteten Steuerkomponenten 171..177 und in eine beliebige Richtung gestartet werden kann, ohne dass dadurch die korrekte Reihung der Steuerkomponenten 171..177 beeinflusst wird. Vorteilhaft braucht beim Aufbau einer Förderanlage 1 daher keine Rücksicht darauf genommen werden, dass die Förderrollen 4 oder der Conveyor Controllern 18 respektive der Master Conveyor Controller 19 an einer bestimmten Stelle im Verlauf der Förderanlage 1 eingebaut respektive angeschlossen werden müssen. Der Aufbau einer Förderanlage 1 kann daher sehr flexibel erfolgen.

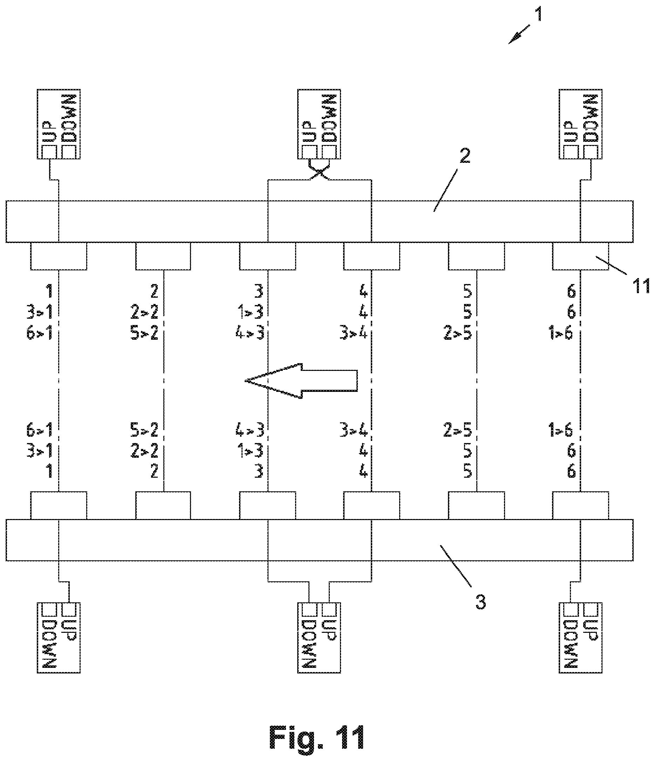

Die Fig. 11 soll dies noch einmal verdeutlichen. Dabei ist im oberen Bereich eine Variante dargestellt, bei der die Motor Controller 170 (in der Anschlussbox 11) in der Förderrichtung, die durch den Pfeil dargestellt ist, rechts angeordnet sind. Im unteren Bereich ist dagegen eine Variante dargestellt, bei der die Motor Controller 170 in der Förderrichtung links angeordnet sind. Der Adressierungsvorgang wird jeweils in der Richtung "up" gestartet. Ziel sind jeweils in Förderrichtung absteigende Adressen. Bei den folgenden drei Beispielen wird die im "down"-Zweig vergebene Reihung dazu beibehalten, die Reihung im "up"-Zweig dagegen umgekehrt.

Im ersten Beispiel (links oben, erste Zeile) ist der "up"-Zweig nicht vorhanden, die Kette der Motor Controller 170 wird daher im "down"-Zweig von 1 bis 6 durchnummeriert respektive adressiert. Die erhaltene Reihenfolge entspricht direkt der gewünschten Reihenfolge.

Im zweiten Beispiel (Mitte oben, zweite Zeile) werden die Nummern 1 bis 3 im "up"-Zweig und die Nummern 4 bis 6 im "down"-Zweig vergeben. Die Nummern im "up"-Zweig werden entsprechend der oben genannten Vorschrift umgekehrt. Die erhaltene Reihenfolge entspricht wiederum der gewünschten Reihenfolge.

Im dritten Beispiel (rechts oben, dritte Zeile) ist der "down"-Zweig nicht vorhanden, die Kette der Motor Controller 170 wird daher im "up"-Zweig von 1 bis 6 durchnummeriert respektive adressiert. Die erhaltene Reihenfolge wird umgekehrt und entspricht dann der gewünschten Reihenfolge.

Die Reihenfolge ist also völlig unabhängig vom Startpunkt des Adressierungsvorgangs.

Die weiteren Beispiele (rechts unten, vierte Zeile), (Mitte unten, fünfte Zeile) und links unten, sechste Zeile) laufen völlig analog ab. Der Adressierungsvorgang wird wiederum jeweils in der Richtung "up" gestartet. Allerdings wird nun die im "up"-Zweig vergebene Reihung beibehalten, die Reihung im "down"-Zweig dagegen umgekehrt. Ziel sind wiederum jeweils in Förderrichtung absteigende Adressen.

Auch hier ist die Reihenfolge unabhängig vom Startpunkt des Adressierungsvorgangs.

In den vorangegangenen Beispielen wurde jeweils ein Segment der Förderanlage 1 betrachtet, das einem Conveyor Controller 18 respektive einem Master Conveyor Controller 19 zugeordnet ist. Selbstverständlich kann das vorgestellte Verfahren in allen Varianten auch auf einen größeren Abschnitt einer Förderanlage 1 oder einer kompletten Förderanlage 1 angewandt werden.

Ist die physische Reihenfolge der Conveyor Controller 18 / Master Conveyor Controller 19 bekannt, so kann eine Gesamtreihenfolge der Förderrollen 4 dadurch gebildet werden, dass in einem ersten Schritt die Reihenfolge in den genannten Segmenten gebildet wird und daraus gemeinsam mit der Reihenfolge der Conveyor Controller 18 / Master Conveyor Controller 19 die Gesamtreihenfolge gebildet wird. Denkbar ist aber auch, dass mehrere Segmente mit dem offenbarten Adressierungsverfahren adressiert respektive gereiht werden. Dabei kann die Kontrolle beim Wechsel eines Segments von einem der Conveyor Controller 18 / Master Conveyor Controller 19 auf einen anderen der Conveyor Controller 18 / Master Conveyor Controller 19 übergeben werden. Beispielsweise kann diese Übergabe durch die zentralen Steuerung 20 koordiniert werden. Denkbar ist auch, dass die Adressierung beziehungsweise Reihung als solche von der zentralen Steuerung 20 durchgeführt wird, und der Conveyor Controller 18 / Master Conveyor Controller 19 die dazu nötigen Nachrichten mehr oder minder transparent weiterreichen.

Selbstverständlich ist das offenbarte Verfahren nicht an eine der dargestellten Systemarchitekturen gebunden, sondern die Förderanlage 1 kann in steuerungstechnischer Hinsicht auch anders organisiert sein. In diesem Zusammenhang sei erwähnt, dass der CAN-Bus und das Ethernet zwar vorteilhaft für das genannte Verfahren sind, jedoch lediglich beispielhaft genannt wurden. Selbstverständlich können auch andere Kommunikationstechnologien eingesetzt werden, bis hin zur drahtlosen Kommunikation.

In diesem Sinne kann auch die Daisy-Chain-Leitung 23 drahtlos ausgeführt sein, beispielsweise in dem die einzelnen Abschnitte derselben durch optische Kommunikationsstrecken gebildet sind. Denkbar wäre, dass ein Selektionssignal via Infrarot von einem Motor Controller 170 zum nächsten geleitet wird. Durch die Abschattung der Anschlussbox 11 wird dabei sichergestellt, dass das Signal nur zu einem direkt benachbarten Motor Controller 170 gesendet wird. Der Verdrahtungsaufwand für eine Förderanlage reduziert sich in einem solchen Fall auf das Verlegen eines Energieversorgungsbusses 15.

Die gezeigten Beispiele beschreiben die Adressierung beziehungsweise Reihung von Förderrollen 4 einer Förderanlage 1. Selbstverständlich ist das offenbarte Verfahren nicht auf die Adressierung/Reihung von Förderrollen 4 eingeschränkt, sondern kann beispielweise auch auf die Lichtschranken 13 angewandt werden.

Die Ausführungsbeispiele zeigen mögliche Ausführungsvarianten einer Förderanlage 1 beziehungsweise eines Adressierungsverfahrens für eine solche Förderanlage 1, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die Förderanlage 1 in der Realität auch mehr oder weniger Bestandteile als dargestellt umfassen kann.

Der Ordnung halber sei abschließend darauf hingewiesen, dass zum besseren Verständnis des Aufbaus der Förderanlage 1 dieses beziehungsweise dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Förderanlage
- 2, 3: Rahmenprofil
- 4: motorisierte Förderrolle
- 5: Riemen

- 6, 7: nicht motorisierte Förderrolle
- 8, 9: Führungsschiene
- 10: Montagebügel

- 11: Anschlussbox
- 12: Steuerung
- 13: Photodetektor
- 14: Reflektor
- 15: Energieversorgungsbus

- 16: -
- 170..177: Motor Controller
- 18: Conveyor Controller
- 19: Master Conveyor Controller
- 20: zentrale Steuerung

- 21: Motor
- 22: -
- 23: Daisy-Chain-Leitung
- 24: Kommunikationsbus
- 250..257: Schalter

## Patentansprüche

1. Verfahren zum Adressieren von Steuerkomponenten (170..177) einer Gruppe mehrerer linear verketteter Steuerkomponenten (170..177) einer Förderanlage (1), **gekennzeichnet durch** die Schritte
a) Schrittweises Zuweisen aufsteigender/absteigender Adressen zu Steuerkomponenten (171..174), wobei die Steuerkomponenten (170..177) ausgehend von einer beliebigen, jedoch nicht an einem Ende der genannten Kette liegenden, Steuerkomponente (171) bis zu einem ersten Ende der genannten Kette angeordnet sind, mit Hilfe einer Daisy-Chain-Auswahlleitung (23),
b) Schrittweises Zuweisen aufsteigender/absteigender Adressen zu Steuerkomponenten (175..177) ausgehend von jener Steuerkomponente (175), die der in Schritt a) genannten Steuerkomponente (171) in Richtung des zweiten Endes der genannten Kette benachbart angeordnet ist, bis zum genannten zweiten Ende mit Hilfe der Daisy-Chain-Auswahlleitung (23), und
c) Aufsteigendes/absteigendes Adressieren der in Schritt a) adressierten Steuerkomponenten (171..174) in umgekehrter Reihenfolge.

2. Verfahren zum Adressieren von Steuerkomponenten (170..177) einer Gruppe mehrerer linear verketteter Steuerkomponenten (170..177) einer Förderanlage (1), **gekennzeichnet durch** die Schritte
a) Schrittweises Speichern einer Reihenfolge von ungeordnet zu Steuerkomponenten (170..177) zugewiesenen Adressen, wobei die Steuerkomponenten (170..177) ausgehend von einer beliebigen, jedoch nicht an einem Ende der genannten Kette liegenden, Steuerkomponente (171) bis zu einem ersten Ende der genannten Kette angeordnet sind, mit Hilfe einer Daisy-Chain-Auswahlleitung (23),
b) Schrittweises Speichern einer Reihenfolge von ungeordnet zu Steuerkomponenten (170..177) zugewiesenen Adressen ausgehend von jener Steuerkomponente (175), die der in Schritt a) genannten Steuerkomponente (171) in Richtung des zweiten Endes der genannten Kette benachbart angeordnet ist, bis zum genannten zweiten Ende mit Hilfe der Daisy-Chain-Auswahlleitung (23), und
c) Umkehren der in Schritt a) gespeicherten Reihenfolge und Zuordnen der ungeordnet zugewiesenen Adressen (171..177) zu der genannten, umgekehrten Reihenfolge und Zuordnen der ungeordnet zugewiesenen Adressen (171..177) zu der in Schritt b) genannten Reihenfolge.

3. Verfahren nach Anspruch 1 oder 2, **dadurch gekennzeichnet, dass** das Zuweisen einer Adresse zu beziehungsweise ein Auslesen einer Adresse aus einer Steuerkomponente (170..177) über einen Kommunikationsbus (24) erfolgt, an den alle Steuerkomponenten (170..177) der Gruppe gleichwertig angeschlossen sind.

4. Verfahren nach einem der Ansprüche 1 bis 3, **dadurch gekennzeichnet, dass** das Zuweisen einer Adresse oder das Speichern der Reihenfolge ungeordnet zugewiesener Adressen im Zuge der Adressierung von Steuerkomponenten (170..177) durch eine übergeordnete Steuerung (18, 19, 20) gesteuert wird.

5. Verfahren nach einem der Ansprüche 1 bis 4, **dadurch gekennzeichnet, dass** für die Auswahl einer aktuell zu adressierenden Steuerkomponente (170..177) ein dafür vorgesehenes Signal über die Daisy-Chain-Auswahlleitung (23) an die genannte Steuerkomponente (170..177) gesendet beziehungsweise angelegt wird und dieses nach erfolgreicher Adressierung an jene benachbarte Steuerkomponente (170..177) weitergeleitet wird, welche im Fall a) in Richtung des ersten Endes der genannten Kette und im Fall b) in Richtung des zweiten Endes der genannten Kette nachfolgt.

6. Verfahren nach Anspruch 5, **dadurch gekennzeichnet, dass** das Weiterleiten des genannten Signals durch Schließen eines die Daisy-Chain-Auswahlleitung (23) unterbrechenden Schalters (250..257) erfolgt.

7. Verfahren nach Anspruch 5, **dadurch gekennzeichnet, dass** das Weiterleiten des genannten Signals durch aktives Erzeugen desselben erfolgt.

8. Verfahren nach einem der Ansprüche 1 bis 7, **dadurch gekennzeichnet, dass** Schritt a) durch Senden/Anlegen eines Signals zum Starten eines Adressierungsvorgangs über einen ersten Zweig der zwischen zwei Steuerkomponenten (170..177) unterbrochen Daisy-Chain-Auswahlleitung (23) und Schritt b) durch Senden/Anlegen eines Signals zum Starten eines Adressierungsvorgangs über den zweiten Zweig der zwischen zwei Steuerkomponenten (170..177) unterbrochen Daisy-Chain-Auswahlleitung (23) gestartet werden.

9. Verfahren nach Anspruch 8, **dadurch gekennzeichnet, dass** die genannten Signale von einer übergeordneten Steuerung (18, 19, 20) gesendet/angelegt werden, die mit den beiden Zweigen der Daisy-Chain-Auswahlleitung (23) verbunden ist.

10. Verfahren nach einem der Ansprüche 1 bis 9, **dadurch gekennzeichnet, dass** das Signal für die aktuell zu adressierende Steuerkomponente (170..177) in Form einer Bitfolge, eines Spannungspegels, eines Strompegels oder einer Pegeländerung von Spannung und/oder Strom über die Daisy-Chain-Auswahlleitung (23) gesendet beziehungsweise an diese angelegt wird.

11. Verfahren nach einem der Ansprüche 1 bis 10, **dadurch gekennzeichnet, dass** alle Steuerkomponenten (170..177) wenigstens eines Teils der Gruppe vor Schritt a) mit für die Steuerkomponenten (170..177) eindeutigen Adressen ungeordnet beziehungsweise zufällig adressiert werden.

12. Verfahren nach Anspruch 11, **dadurch gekennzeichnet, dass** Schritt a) bei der Steuerkomponente (170..177) mit der niedrigsten/höchsten Adresse des genannten Teils der Gruppe beginnt.

13. Verfahren nach einem der Ansprüche 1 bis 7, insbesondere in Verbindung mit einem der Ansprüche 10 bis 12, **dadurch gekennzeichnet, dass** Schritt a) bei einer zufällig ausgewählten Steuerkomponente (170..177) des genannten Teils der Gruppe beginnt.

14. Förderanlage (1) zum Transport von Förderobjekten, beispielsweise Behältern, umfassend
- eine Gruppe mehrerer mit Hilfe einer Daisy-Chain-Auswahlleitung (23) linear verketteter Steuerkomponenten (170..177),
**gekennzeichnet durch**
- Mittel, die dazu eingerichtet sind, aufsteigende/absteigende Adressen zu Steuerkomponenten (170..177) in einem Schritt a) schrittweise zuzuweisen, wobei die Steuerkomponenten (170..177) ausgehend von einer beliebigen, jedoch nicht an einem Ende der genannten Kette liegenden, Steuerkomponente (171) bis zu einem ersten und einem zweiten Ende der genannten Kette angeordnet sind, mit Hilfe der Daisy-Chain-Auswahlleitung (23),
- Mittel, die dazu eingerichtet sind, aufsteigende/absteigende Adressen zu Steuerkomponenten (175..177) in einem Schritt b) schrittweise zuzuweisen, ausgehend von jener Steuerkomponente (175), die der in Schritt a) genannten Steuerkomponente (171) in Richtung des zweiten Endes der genannten Kette benachbart angeordnet ist, bis zum genannten zweiten Ende mit Hilfe der Daisy-Chain-Auswahlleitung (23), und
- Mittel zum aufsteigenden/absteigenden Adressieren der in Schritt a) adressierten Steuerkomponenten (170..177) in einem ersten Zweig in einer Reihenfolge, welche einer Umkehrung der Reihenfolge der in Schritt a) zugewiesenen Adressen entspricht.

15. Förderanlage (1) zum Transport von Förderobjekten, beispielsweise Behältern, umfassend
- eine Gruppe mehrerer mit Hilfe einer Daisy-Chain-Auswahlleitung (23) linear verketteter Steuerkomponenten (170..177),
**gekennzeichnet durch**
- Mittel, die dazu eingerichtet sind, eine Reihenfolge von ungeordnet zu Steuerkomponenten (170..177) zugewiesenen Adressen in einem Schritt a) schrittweise zu speichern, wobei die Steuerkomponenten (170..177) ausgehend von einer beliebigen, jedoch nicht an einem Ende der genannten Kette liegenden, Steuerkomponente (171) bis zu einem ersten und einem zweiten Ende der genannten Kette angeordnet sind, mit Hilfe der Daisy-Chain-Auswahlleitung (23),
- Mittel, die dazu eingerichtet sind, eine Reihenfolge von ungeordnet zu Steuerkomponenten (170..177) zugewiesenen Adressen in einem Schritt b) schrittweise zu speichern, ausgehend von jener Steuerkomponente (175), die der in Schritt a) genannten Steuerkomponente (171) in Richtung des zweiten Endes der genannten Kette benachbart angeordnet ist, bis zum genannten zweiten Ende mit Hilfe der Daisy-Chain-Auswahlleitung (23), und
- Mittel zum Zuordnen aller ungeordnet zugewiesenen Adressen eines ersten Zweigs zu einer Reihenfolge, welche einer Umkehrung der in Schritt a) ermittelten Reihenfolge entspricht, und zum Zuordnen aller ungeordnet zugewiesenen Adressen eines zweiten Zweigs zu einer Reihenfolge, welche der in Schritt b) ermittelten Reihenfolge entspricht.

16. Förderanlage (1) nach Anspruch 14 oder 15, **gekennzeichnet durch** eine übergeordnete Steuerung (18, 19, 20) zum Steuern des Adressierungsvorgangs der genannten Steuerkomponenten (170..177).

17. Förderanlage (1) nach Anspruch 16, **dadurch gekennzeichnet, dass** die
- Mittel zum Zuweisen aufsteigender/absteigender Adressen an die schrittweise adressierten Steuerkomponenten (170..177) oder zum Speichern einer Reihenfolge von ungeordnet zu den Steuerkomponenten (170..177) zugewiesenen Adressen und die
- Mittel zum aufsteigenden/absteigenden Adressieren aller Steuerkomponenten (170..177) der Gruppe entsprechend ihrer Reihenfolge in der genannten Kette anhand des schrittweisen Adressierungsvorgangs oder zum Zuordnen aller zugewiesenen Adressen zu der genannten Reihenfolge in der übergeordneten Steuerung (18, 19, 20) integriert sind.

18. Förderanlage nach Anspruch 16 oder 17, **dadurch gekennzeichnet, dass** die Daisy-Chain-Auswahlleitung (23) zwischen zwei Steuerkomponenten (170..177) unterbrochen ist und beide Enden derselben mit der übergeordneten Steuerung (18, 19, 20) verbunden sind.

19. Förderanlage nach einem der Ansprüche 14 bis 18 **gekennzeichnet durch** einen Kommunikationsbus (24), welcher die Steuerkomponenten (170..177) untereinander beziehungsweise mit der übergeordneten Steuerung (18, 19, 20) verbindet.

20. Förderanlage nach einem der Ansprüche 14 bis 19, **dadurch gekennzeichnet, dass** eine Steuerkomponente (170..177) eine Antriebssteuerung für eine Förderrolle (4) der Förderanlage (1) umfasst.

## Claims

1. A method for addressing control components (170..177) of a group of several linearly chained control components (170..177) of a conveying system (1), **characterized by** the steps
a) step-by-step allocation of ascending/descending addresses to control components (171..174), wherein the control components (170..177) are arranged from any control component (171), but not one lying at an end of the mentioned chain, to a first end of the mentioned chain, by means of a daisy-chain selection line (23);
b) step-by-step allocation of ascending/descending addresses to control components (175..177) proceeding from the control component (175) arranged adjacent to the control component (171) mentioned in step a) in the direction of the second end of the mentioned chain to the mentioned second end by means of the daisy-chain selection line (23); and
c) ascending/descending addressing of the control components (171..174) addressed in step a) in the reversed sequence.

2. A method for addressing control components (170..177) of a group of several linearly chained control components (170..177) of a conveying system (1), **characterized by** the steps
a) step-by-step saving of a sequence of addresses, which are allocated to the control components (170..177) in unordered manner, wherein the control components (170..177) are arranged from any control component (171), but not one lying at an end of the mentioned chain, to a first end of the mentioned chain, by means of a daisy-chain selection line (23);
b) step-by-step saving of a sequence of addresses, which are allocated to the control components (170..177) in unordered manner, proceeding from the control component (175) arranged adjacent to the control component (171) mentioned in step a) in the direction of the second end of the mentioned chain to the mentioned second end by means of the daisy-chain selection line (23); and
c) reversing of the sequence stored in step a) and allocation of addresses (171..177) allocated in unordered manner to the mentioned, reversed sequence and allocation of addresses (171..177) allocated in unordered manner to the sequence mentioned in step b).

3. The method according to claim 1 or 2, **characterized in that** the allocation of an address to or reading of an address from a control component (170..177) is performed via a communication bus (24), to which all of the control components (170..177) of the group are connected equally.

4. The method according to one of claims 1 to 3, **characterized in that** the allocation of an address and/or saving of the sequence of addresses allocated in unordered manner is controlled during the addressing of control components (170..177) by a superordinate control (18, 19, 20).

5. The method according to one of claims 1 to 4, **characterized in that**, for the selection of a control component (170..177) to be currently addressed, an intended signal is sent or applied via the daisy-chain selection line (23) to the mentioned control component (170..177) and the signal is passed on to the adjacent control component (170..177) after the completion of the addressing process, which control component follows in case a) in the direction of the first end of the mentioned chain and in case b) in the direction of the second end of the mentioned chain.

6. The method according to claim 5, **characterized in that** the mentioned signal is passed on by closing a switch (250..257) interrupting the daisy-chain selection line (23).

7. The method according to claim 5, **characterized in that** the mentioned signal is passed on by actively generating the same.

8. The method according to one of claims 1 to 7, **characterized in that** step a) is started by sending/applying a signal for starting an addressing process via a first branch of the daisy-chain selection line (23) interrupted between two control components (170..177) and step b) by sending/applying a signal for starting an addressing process via the second branch of the daisy-chain selection line (23) interrupted between two control components (170..177).

9. The method according to claim 8, **characterized in that** the mentioned signals are sent/applied by a superordinate control (18, 19, 20) which is connected to the two branches of the daisy-chain selection line (23).

10. The method according to one of claims 1 to 9, **characterized in that** the signal for the control component (170..177) to be currently addressed is sent via the daisy-chain selection line (23) or applied to the latter in the form of a bit sequence, a voltage level, a current level or a change in the level of the voltage and/or current.

11. The method according to one of claims 1 to 10, **characterized in that** all of the control components (170..177) of at least a part of the group are addressed in unordered manner or randomly before step a) with unique addresses for the control components (170..177).

12. The method according to claim 11, **characterized in that** step a) begins at the control component (170..177) with the lowest/highest address of the mentioned part of the group.

13. The method according to one of claims 1 to 7, particularly in the context of one of the claims 10 to 12, **characterized in that** step a) begins with a randomly selected control component (170..177) of said part of the group.

14. A conveying system (1) for transporting conveyed objects, for example containers, comprising
- a group of several control components (170..177) linearly chained by means of a daisy-chain selection line (23),
**characterized by**
- means set up for the step-by-step allocation of ascending/descending addresses to control components (170..177) in a step a), wherein the control components (170..177) are arranged from any control component (171), but not one lying at an end of the mentioned chain, to a first end and a second end of the mentioned chain, by means of a daisy-chain selection line (23);
- means set up for the step-by-step allocation of ascending/descending addresses to control components (175..177) in a step b), proceeding from the control component (175) arranged adjacent to the control component (171) mentioned in step a) in the direction of the second end of the mentioned chain to the mentioned second end by means of the daisy-chain selection line (23); and
- means for the ascending/descending addressing of the control components (170..177) addressed in step a) in a first branch in a sequence corresponding to a reversal of the sequence of the addresses allocated in step a).

15. A conveying system (1) for transporting conveyed objects, for example containers, comprising
a group of several control components (170..177) linearly chained by means of a daisy-chain selection line
**characterized by**
- means set up for the step-by-step saving of a sequence of addresses, which are allocated to control components (170..177) in unordered manner in a step a), wherein the control components (170..177) are arranged from any control component (171), but not one lying at an end of the mentioned chain, to a first end and a second end of the mentioned chain, by means of a daisy-chain selection line (23);
- means set up for the step-by-step saving of a sequence of addresses, which are allocated to control components (170..177) in unordered manner in a step b), proceeding from the control component (175) arranged adjacent to the control component (171) mentioned in step a) in the direction of the second end of the mentioned chain to the mentioned second end by means of the daisy-chain selection line (23);
- means for the allocation of all addresses of a first branch allocated in unordered manner to a sequence corresponding to a reversal of the sequence determined in step a), and for the allocation of all addresses of a second branch allocated in unordered manner to a sequence corresponding to the sequence determined in step b).

16. The conveying system (1) according to claim 14 or 15, **characterized by** a superordinate control (18, 19, 20) for controlling the addressing process of the mentioned control components (170..177).

17. The conveying system (1) according to claim 16, **characterized in that** the
- means for allocating ascending/descending addresses to the step-by-step addressed control components (170..177) and/or for saving a sequence of addresses allocated in unordered manner to the control components (170..177) and the
- means for the ascending/descending addressing of all of the control components (170..177) of the group according to their sequence in the mentioned chain by way of the step-by-step addressing process or for allocating all of the allocated addresses to the mentioned sequence are integrated in the superordinate control (18, 19, 20).

18. The conveying system according to claim 16 or 17, **characterized in that** the daisy-chain selection line (23) between two control components (170..177) is interrupted, and both ends of the latter are connected to the superordinate control (18, 19, 20).

19. The conveying system according to one of claims 14 to 18, **characterized by** a communication bus (24), which connects the control components (170..177) to one another / to the superordinate control (18, 19, 20).

20. The conveying system according to one of claims 14 to 19, **characterized in that** a control component (170..177) comprises a drive control for a conveyor roller (4) of the conveying system (1).

## Revendications

1. Procédé d'adressage de composants de commande (170..177) d'un groupe de plusieurs composants de commande (170..177) concaténés de manière linéaire d'une installation de convoyage (1), **caractérisé par** les étapes suivantes :
a) attribution par étapes d'adresses croissantes/décroissantes à des composants de commande (171..174), les composants de commande (170..177) étant disposés, à partir d'un composant de commande (171) quelconque, mais ne se trouvant pas à une extrémité de la chaîne mentionnée, jusqu'à une première extrémité de la chaîne mentionnée, à l'aide d'une ligne de sélection en guirlande (23),
b) attribution par étapes d'adresses croissantes/décroissantes à des composants de commande (175..177) à partir du composant de commande (175) qui est adjacent au composant de commande (171) mentionné dans l'étape a), en direction de la deuxième extrémité de la chaîne mentionnée , jusqu'à la deuxième extrémité mentionnée à l'aide de la ligne de sélection en guirlande (23) et
c) adressage croissant/décroissant des composants de commande (171..174) adressés à l'étape a), dans l'ordre inverse.

2. Procédé d'adressage de composants de commande (170..177) d'un groupe de plusieurs composants de commande (170..177) concaténés de manière linéaire d'une installation de convoyage (1), **caractérisé par** les étapes suivantes :
a) mémorisation par étapes d'un ordre d'adresses attribuées de manière non ordonnée à des composants de commande (170..177), les composants de commande (170..177) étant disposés, à partir d'un composant de commande (171) quelconque, mais ne se trouvant pas à une extrémité de la chaîne mentionnée, jusqu'à une première extrémité de la chaîne mentionnée, à l'aide d'une ligne de sélection en guirlande (23),
b) mémorisation par étapes d'un ordre d'adresses attribuées de manière non ordonnée à des composants de commande (170..177) à partir du composant de commande (175) qui est adjacent au composant de commande (171) mentionné dans l'étape a), en direction de la deuxième extrémité de la chaîne mentionnée, jusqu'à la deuxième extrémité mentionnée à l'aide de la ligne de sélection en guirlande (23) et
c) inversion de l'ordre mémorisé à l'étape a) et assignation des adresses (171..177) attribuées de manière non ordonnée dans l'ordre inversé mentionné et assignation des adresses (171..177) attribuées de manière non ordonnée dans l'ordre mentionné dans l'étape b).

3. Procédé selon la revendication 1 ou 2, **caractérisé en ce que** l'attribution d'une adresse ou une lecture d'une adresse dans un composant de commande (170..177) a lieu par l'intermédiaire d'un bus de communication (24), auquel sont raccordés de manière équivalente tous les composants de commande (170..177) du groupe.

4. Procédé selon l'une des revendications 1 à 3, **caractérisé en ce que** l'attribution d'une adresse ou la mémorisation de l'ordre des adresses attribuées de manière non ordonnée est contrôlée au cours de l'adressage de composants de commande (170..177) par un dispositif de commande de niveau supérieur (18, 19, 20).

5. Procédé selon l'une des revendications 1 à 4, **caractérisé en ce que**, pour la sélection d'un composant de commande (170..177) actuellement à adresser, un signal prévu à cet effet est envoyé ou appliqué par l'intermédiaire de la ligne de sélection en guirlande (23) au composant de commande (170..177) mentionné et celui-ci est transmis, après un adressage réussi, au composant de commande (170..177) adjacent qui suit, dans le cas a), en direction de la première extrémité de la chaîne mentionnée et, dans le cas b) en direction de la deuxième extrémité de la chaîne mentionnée.

6. Procédé selon la revendication 5, **caractérisé en ce que** la transmission du signal mentionné a lieu par la fermeture d'un interrupteur (250..257) interrompant la ligne de sélection en guirlande (23).

7. Procédé selon la revendication 5, **caractérisé en ce que** la transmission du signal mentionné a lieu par génération active.

8. Procédé selon l'une des revendications 1 à 7, **caractérisé en ce que** l'étape a) est démarrée par l'envoi/application d'un signal pour le démarrage d'un processus d'adressage par l'intermédiaire d'une première branche de la ligne de sélection en guirlande (23) interrompue entre deux composants de commande (170..177) et l'étape b) est démarrée par l'envoi/application d'un signal pour le démarrage d'un processus d'adressage par l'intermédiaire de la deuxième branche de la ligne de sélection en guirlande (23) interrompue entre deux composants de commande (170..177).

9. Procédé selon la revendication 8, **caractérisé en ce que** les signaux mentionnés sont envoyés/appliqués par un dispositif de commande de niveau supérieur (18, 19, 20) qui est relié avec les deux branches de la ligne de sélection en guirlande (23).

10. Procédé selon l'une des revendications 1 à 9, **caractérisé en ce que** le signal pour le composant de commande (170..177) actuellement à adresser st envoyé ou appliqué à celui-ci sous la forme d'une suite de bits, d'un niveau de tension, d'un niveau de courant ou d'une variation de niveau de tension et/ou de courant par l'intermédiaire de la ligne de sélection en guirlande (23).

11. Procédé selon l'une des revendications 1 à 10, **caractérisé en ce que** tous les composants de commande (170..177) d'au moins une partie du groupe sont adressés avant l'étape a) avec des adresses uniques pour les composants de commande (170..177), de manière non ordonnée ou aléatoire.

12. Procédé selon la revendication 11, **caractérisé en ce que** l'étape a) commence, par le composant de commande (170..177) avec l'adresse la plus basse/élevée de la partie mentionnée du groupe.

13. Procédé selon l'une des revendications 1 à 7, plus particulièrement en lien avec l'une des revendications 10 à 12, **caractérisé en ce que** l'étape a) commence par un composant de commande (170..177) sélectionné de manière aléatoire de la partie mentionnée du groupe.

14. Installation de convoyage (1) pour le transport d'objets à convoyer, par exemple des récipients, comprenant :
- un groupe de plusieurs composants de commande (170..177) concaténés de manière linéaire à l'aide d'une ligne de sélection en guirlande (23),
**caractérisé par**
- des moyens qui sont conçus pour attribuer par étapes des adresses croissantes/décroissantes à des composants de commande (170..177) dans une étape a), les composants de commande (170..177) étant disposés, à partir d'un composant de commande (171) quelconque, mais ne se trouvant pas à une extrémité de la chaîne mentionnée, jusqu'à une première ou une deuxième extrémité de la chaîne mentionnée, à l'aide de la ligne de sélection en guirlande (23),
- des moyens qui sont conçus pour attribuer par étapes des adresses croissantes/décroissantes à des composants de commande (175..177) dans une étape b), à partir du composant de commande (175) qui est adjacent au composant de commande (171) mentionné à l'étape a) en direction de la deuxième extrémité de la chaîne mentionnée, jusqu'à la deuxième extrémité mentionnée à l'aide de la ligne de sélection en guirlande (23), et
- des moyens pour l'adressage croissant/décroissant des composants de commande (170..177) adressés à l'étape a) dans une première branche dans un ordre qui correspond à une inversion de l'ordre des adresses attribuées à l'étape a).

15. Installation de convoyage (1) pour le transport d'objets à convoyer, par exemple des récipients, comprenant :
- un groupe de plusieurs composants de commande (170..177) concaténés de manière linéaire à l'aide d'une ligne de sélection en guirlande (23),
**caractérisé par**
- des moyens qui sont conçus pour mémoriser par étapes un ordre d'adresses attribuées de manière non ordonnée à des composants de commande (170..177) dans une étape a), les composants de commande (170..177) étant disposés, à partir d'un composant de commande (171) quelconque, mais ne se trouvant pas à une extrémité de la chaîne mentionnée, jusqu'à une première extrémité de la chaîne mentionnée, à l'aide d'une ligne de sélection en guirlande (23),
- des moyens qui sont conçus pour mémoriser par étapes un ordre d'adresses attribuées de manière non ordonnée à des composants de commande (170..177) dans une étape b) à partir du composant de commande (175) qui est adjacent au composant de commande (171) mentionné dans l'étape a), en direction de la deuxième extrémité de la chaîne mentionnée, jusqu'à la deuxième extrémité mentionnée à l'aide de la ligne de sélection en guirlande (23) et
- des moyens pour l'assignation à toutes les adresses attribuées de manière non ordonnée d'une première branche à un ordre qui correspond à une inversion de l'ordre déterminé à, l'étape a) et pour l'assignation à toutes les adresses attribuées de manière non ordonnée d'une deuxième branche à un ordre qui correspond à l'ordre déterminé à l'étape b).

16. Installation de convoyage (1) selon la revendication 14 ou 15, **caractérisée par** un dispositif de commande de niveau supérieur (18, 19, 20) pour la commande du processus d'adressage des composants de commande (170..177) mentionnés.

17. Installation de convoyage (1) selon la revendication 16, **caractérisée en ce que**
- les moyens pour l'attribution d'adresses croissantes/décroissantes aux composants de commande (170..177) adressés par étapes ou pour la mémorisation d'un ordre d'adresses attribuées de manière non ordonnée aux composants de commande (170..177) et
- les moyens d'adressage croissant/décroissant de tous les composants de commande (170..177) du groupe en fonction de leur ordre dans la chaîne mentionnée à l'aide du processus d'adressage par étapes ou pour l'assignation à toutes les adresses attribuées de l'ordre mentionné sont intégrés dans le dispositif de commande de niveau supérieur (18, 19, 20).

18. Installation de convoyage selon la revendication 16 ou 17, **caractérisée en ce que** la ligne de sélection en guirlande (23) est interrompue entre deux composants de commande (170..177) et les deux extrémités de celle-ci sont reliées avec le dispositif de commande de niveau supérieur (18, 19, 20).

19. Installation de convoyage selon l'une des revendications 14 à 18, **caractérisée par** un bus de communication (24) qui relie les composants de commande (170..177) entre eux / avec le dispositif de commande de niveau supérieur (18, 19, 20).

20. Installation de convoyage selon l'une des revendications 14 à 19, **caractérisée en ce qu'**un composant de commande (170..177) comprend une commande d'entraînement pour un rouleau de convoyage (4) de l'installation de convoyage (1).
